# EUROPÄISCHE PATENTSCHRIFT

(11) **EP 1 296 427 B1**
(45) Veröffentlichungstag und Bekanntmachung des Hinweises auf die Patenterteilung: **13.12.2006**
(21) Anmeldenummer: 02016535.3
(22) Anmeldetag: 24.07.2002
(51) Int. Cl.: H02G 3/04

(54) **Verdrahtungskanal**
Cable duct
Chemin de câblage

(30) Priorität: 25.09.2001 DE 20115767 U
(43) Veröffentlichungstag der Anmeldung: 26.03.2003
(73) Patentinhaber: Tehalit GmbH, 67716 Heltersberg (DE)
(72) Erfinder: Eberle, Patrick, 66292 Riegelsberg (DE)
(74) Vertreter: Patentanwälte Möll und Bitterich

(56) Entgegenhaltungen:
- US-A- 3 890 459

## Beschreibung

Die Erfindung betrifft Verdrahtungskanäle gemäß dem Oberbegriff des Anspruchs 1.

Aus der US 3 890 459 ist ein Verdrahtungskanal bekannt, der aus einem Kanalunterteil mit U-förmigem Querschnitt besteht, gebildet durch einen Boden und zwei Seitenwände. Die Seitenwände werden gebildet durch regelmäßig beabstandete Stege, deren Enden so geformt sind, dass ein Deckel lösbar aufgerastet werden kann. Um bei einer senkrechten oder waagerechten Montage das Herausfallen von Kabeln aus dem geöffneten Kanalunterteil zu verhindern, sind Kabelrückhalteleisten vorgesehen. Diese besitzen einen Fuß, der so geformt ist, dass die Kabelrückhalteleiste zwischen zwei Stegen klemmend befestigt werden kann.

Ein weiterer Verdrahtungskanal mit bei Bedarf ansteckbarer Kabelrückhalteleiste ist bekannt aus der DE 22 01 211 C. Bei diesem Verdrahtungskanal wird das Kabelrückhalteelement zwischen zwei besonderen Klemmleisten innen an der Kanalseitenwand eingeklemmt.

Nachteilig an diesen beiden Konstruktionen ist, dass die Kabelrückhalteelemente durch besondere Einzelteile gebildet werden. Diese muss der Hersteller produzieren, lagern, listen und transportieren, der Installateur muss sie bestellen, lagern und montieren. Werden die falschen Rückhalteelemente bestellt oder wird die Bestellung vergessen, kann der Installateur die Baustelle nicht fertigstellen. Auch haben Kleinteile die Tendenz, spurlos zu verschwinden. Diese Situation ist unbefriedigend.

Der vorliegenden Erfindung liegt daher die Aufgabe zugrunde, einen Verdrahtungskanal der eingangs genannten Art derart zu verändern und zu verbessern, dass der Installateur jederzeit Kabelrückhalteelemente zur Verfügung hat, wenn er sie benötigt, ohne dass diese gesondert produziert, gelagert, gelistet, bestellt und transportiert werden müssen.

Diese Aufgabe wird gelöst durch einen Verdrahtungskanal mit den Merkmalen des Anspruchs 1.

Der vorliegenden Erfindung liegt die Idee zugrunde, die Kabelrückhalteleiste direkt aus den Stegen des Kanalunterteils herzustellen. Dazu ist jeweils ein Paar von Stegen mit korrespondierenden Verbindungselementen ausgerüstet, die eine insbesondere formschlüssige, verrastende Verbindung ermöglichen, was nach dem Abbrechen der Stege vom Kanalunterteil ohne weiteres machbar ist.

Vorteilhafterweise ist am Fuß der Stege eine Sollbruchstelle vorgesehen.

Gemäß einer ersten Ausgestaltung hierzu umfassen die Verbindungselemente Nut und Feder.

Gemäß einer Alternative hierzu umfassen die Verbindungselemente Öffnungen und in diese Öffnungen formschlüssig eingreifende Vorsprünge, vergleichbar mit Schlüssel und Schlüsselloch.

Dabei sind die Verbindungselemente vorteilhafterweise durch Drehen aktivierbar.

Falls der Halt der aus zwei Stegen gebildeten Kabelrückhalteleiste am Kopf eines oder zweier Stege nicht sicher genug sein sollte, kann gemäß einer Weiterbildung der Erfindung in den Kopf wenigstens eines Stegs eine hinterschnittene Öffnung eingeformt sein, die mit dem zangenförmigen Ende der Kabelrückhalteleiste kooperiert. Auf diese Weise kann eine noch stabilere Verbindung zwischen Kanalunterteil und Kabelrückhalteleiste erreicht werden.

Gemäß einer bevorzugten Ausgestaltung der Erfindung sind die freien Enden der Stege so geformt, dass sie sowohl die Zange als auch das Deckelhalteprofil bilden.

Anhand der Zeichnung soll die Erfindung in Form eines Ausführungsbeispiels näher erläutert werden. Es zeigen jeweils ausschnittsweise
- Fig.1: ein Unterteil eines Verdrahtungskanals in Seitenansicht,
- Fig.2: die Draufsicht auf das Kanalunterteil der Fig. 1,
- Fig.3: eine Frontsicht des Kanalunterteils der Fig. 1 und 2,
- Fig.4: eine aus zwei miteinander verbundenen Stegen gebildete Kabelrückhalteleiste und
- Fig.5: die Kabelrückhalteleiste der Fig. 4, aufgeklemmt auf das Kanalunterteil der Fig. 1 bis 3.

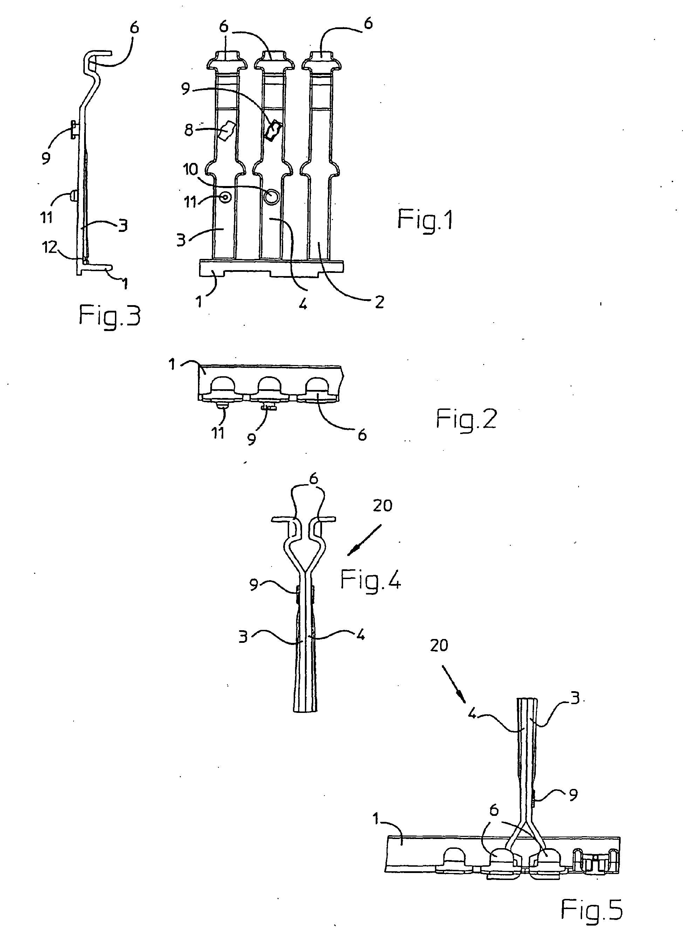

Fig. 1 als Seitenansicht, Fig. 2 als Draufsicht und Fig. 3 als Frontsicht zeigen ausschnittsweise ein Unterteil eines Verdrahtungskanals. Das Unterteil hat einen U-förmigen Querschnitt, gebildet durch einen Boden 1, zwei durch gegenseitig beabstandete Stege 2, 3, 4 gebildete Seitenwände und in die freien Enden der Stege 2, 3, 4, eingeformte Deckelhalteprofile 6. Auf die Deckelhalteprofile 6 kann ein Deckel (nicht dargestellt) lösbar aufgerastet werden.

Ein Paar von Stegen 3, 4 ist mit miteinander korrespondierenden Verbindungselementen 8, 9; 10, 11 versehen. Diese bestehen aus Vorsprüngen 8, 11 und dazu passenden Öffnungen 9, 10, mit deren Hilfe die beiden Stege miteinander verbunden werden können.

Fig. 4 zeigt die beiden Stege 3, 4 in verbundenem Zustand. In dieser Form bilden sie eine Kabelrückhalteleiste 20. Die an die freien Enden der Stege 3, 4 angeformten Deckelhalteprofile 6 bilden eine federnde Zange, mit deren Hilfe die Kabelrückhalteleiste 20 zwischen die Enden zweier Stege 2, 3, 4 geklemmt werden kann. Dies ermöglicht eine sichere und stabile Verbindung der Kabelrückhalteleiste 20 an den Stegen 2, 3, 4. Diese Situation ist in Fig. 5 dargestellt.

## Patentansprüche

1. Verdrahtungskanal, umfassend
- ein Kanalunterteil mit
- einem Boden (1),
- zwei Seitenwänden, gebildet durch gegenseitig beabstandete Stege (2, 3, 4)
- und gegebenenfalls Deckelhalteprofilen (6) an den freien Enden der Stege (2, 3, 4,
- und wenigstens eine Kabelrückhalteleiste (20), lösbar zu befestigen an den freien Enden der Stege (2, 3, 4),
**gekennzeichnet durch** die Merkmale:
- die Kabelrückhalteleiste (20) ist gebildet **durch** zwei Stege (3, 4) aus den Stegen (2,3,4) des Kanalunterteils,
- diese Stege (3, 4) tragen korrespondierende Verbindungselemente (8, 9; 10, 11),
- eine Ende der Kabelrückhalteleiste (20) bildet eine Art Zange, klemmend zu befestigen zwischen den freien Enden der Stege (2, 3, 4) des Kanalunterteils.

2. Verdrahtungskanal nach Anspruch 1, **gekennzeichnet durch** das Merkmal:
- die Verbindungselemente umfassen Nut und Feder.

3. Verdrahtungskanal nach Anspruch 1, **gekennzeichnet durch** die Merkmale:
- die Verbindungselemente umfassen
- Öffnungen (8, 11)
- und in diese formschlüssig eingreifende Vorsprüngen (9, 10).

4. Verdrahtungskanal nach Anspruch 3, **gekennzeichnet durch** das Merkmal:
- die Verbindungselemente (8, 9) sind **durch** Drehen aktivierbar.

5. Verdrahtungskanal nach einem der Ansprüche 1 bis 4, **gekennzeichnet durch** das Merkmal:
- die freien Enden der Stege (2, 3, 4) sind so geformt, dass sie sowohl die Zange als auch das Deckelhalteprofil bilden.

6. Verdrahtungskanal nach einem der Ansprüche 1 bis 5, **gekennzeichnet durch** das Merkmal:
am Fuß der Stege (2, 3, 4) des Kanalunterteils ist eine Sollbruchstelle (12) vorgesehen.

## Claims

1. Wiring duct, comprising
- a duct lower part with
- a bottom (1),
- two side walls, formed by webs (2, 3, 4) disposed at a spacing from one another,
- and optionally cover retaining profiles (6) at the free ends of the webs (2, 3, 4),
- and at least one cable retaining strip (20), which is to be detachably fastened to the free ends of the webs (2, 3, 4),
**characterised by** the features:
- the cable retaining strip (20) is formed by two webs (3, 4) of the webs (2, 3, 4) of the duct lower part,
- these webs (3, 4) bear corresponding connecting elements (8, 9; 10, 11),
- one end of the cable retaining strip (20) forms a kind of pair of tongs, which is to be fastened in a clamping manner between the free ends of the webs (2, 3, 4) of the duct lower part.

2. Wiring duct according to Claim 1, **characterised by** the feature:
- the connecting elements comprise a groove and a tongue.

3. Wiring duct according to Claim 1, **characterised by** the features:
- the connecting elements comprise
- openings (8, 11)
- and projections (9, 10) engaging positively in these.

4. Wiring duct according to Claim 3, **characterised by** the feature:
- the connecting elements (8, 9) can be activated by turning.

5. Wiring duct according to any one of Claims 1 to 4, **characterised by** the feature:
- the free ends of the webs (2, 3, 4) are shaped such that they form both the pair of tongs and the cover retaining profile.

6. Wiring duct according to any one of Claims 1 to 5, **characterised by** the feature:
- a predetermined breaking point (12) is provided at the base of the webs (2, 3, 4) of the duct lower part.

## Revendications

1. Caniveau de câblage, comprenant
- une partie inférieure de caniveau avec
- un fond (1),
- deux parois latérales, formées par des branches mutuellement distantes (2, 3, 4),
- et éventuellement des profilés de maintien de couvercle (6) aux extrémités libres des branches (2, 3, 4),
- et au moins une barrette (20) de retenue de câbles, à fixer de manière détachable aux extrémités libres des branches (2, 3, 4),
**caractérisé par** les caractéristiques suivantes :
- la barrette (20) de retenue de câbles est formée par deux branches (3, 4) parmi les branches (2, 3, 4) de la partie inférieure de caniveau,
- ces branches (3, 4) portent des éléments d'assemblage correspondant (8, 9; 10, 11)
- une extrémité de la barrette (20) de retenue de câbles forme un genre de pince, à fixer par serrage entre les extrémités libres des branches (2, 3, 4) de la partie inférieure de caniveau.

2. Caniveau de câblage selon la revendication 1, **caractérisé par** la caractéristique suivante :
- les éléments d'assemblage sont à rainure et languette.

3. Caniveau de câblage selon la revendication 1, **caractérisé par** les caractéristiques suivantes :
- les éléments d'assemblage comprennent
- des ouvertures (8, 11),
- et des saillies (9, 10) s'engageant positivement dans ces ouvertures.

4. Caniveau de câblage selon la revendication 3, **caractérisé par** la caractéristique suivante :
- les éléments d'assemblage (8, 9) peuvent être activés par rotation.

5. Caniveau de câblage selon l'une des revendications 1 à 4, **caractérisé par** la caractéristique suivante :
- les extrémités libres des branches (2, 3, 4) sont mises en forme de telle sorte qu'elles constituent à la fois la pince et le profilé de maintien de couvercle.

6. Caniveau de câblage selon l'une des revendications 1 à 5, **caractérisé par** la caractéristique suivante :
- un point (12) de rupture privilégiée est prévu à la base des branches (2, 3, 4) de la partie inférieure de caniveau.
